# EUROPÄISCHE PATENTANMELDUNG

(11) **EP 0 567 951 A1**
(43) Veröffentlichungstag der Anmeldung: **03.11.1993**
(21) Anmeldenummer: 93106645.0
(22) Anmeldetag: 23.04.1993
(51) Int. Cl.: C02F 9/00, C02F 1/78, C02F 1/72, C02F 1/32, C02F 1/44

(54) **Verfahren zur Behandlung und Rezyklierung der Abwässer von Kraftfahrzeug-Betriebswerkstätten**

(30) Priorität: 25.04.1992 DE 4213674; 17.11.1992 DE 4238719
(71) Anmelder: DORNIER GMBH, D-88004 Friedrichshafen (DE)
(72) Erfinder: Schmidt, Hans-Jürgen, Dr. Dipl.-Chem., W-7997 Immenstaad (DE); Reich, Joachim, Dipl.-Ing., W-7959 Mietingen (DE)
(74) Vertreter: Landsmann, Ralf, Dipl.-Ing.

(57) **Zusammenfassung**

Abwasserbehandlung und Wiedergewinnung von Waschabwässern aus Kraftfahrzeug-Betriebswerkstätten, wobei eine Oxidationsstufe (41) und eine Mikrofiltrationsstufe (73) hintereinander geschaltet sind.

## Beschreibung

Die Erfindung betrifft Verfahren der Abwasserbehandlung und Wiedergewinnung von Waschabwässern in Kfz-Betrieben.

Während die technischen Maßnahmen zum Umweltschutz in der industriealisierten Kfz-, Bus- und Lkw-Fertigung oft sogar über die gesetzlichen Auflagen hinausgehen, ist besonders die Abwasserbehandlung in Autohäusern, Lackierbetrieben, Speditionen, Busunternehmen und diversen Kleinbetrieben (Autowaschanlagen, spezialisierte Reparaturbetriebe) noch nicht hinreichend eingeführt. Damit herrscht die kontroverse Situation vor, daß in der weitgehend zentralisierten Fertigung das Bestmögliche an Recycling-Technik und umweltschonenden Fertigungsverfahren eingesetzt wird, während bei der dezentralen und somit ökologisch kritischeren Wartung und Reparatur oftmals nur die gesetzlichen Mindestanforderungen erfüllt werden.

Den größten Teil der Abwässer liefern nur wenige Arbeitsabläufe. An Waschplätzen und Waschanlagen fallen Abwässer mit hohen Tensid- und geringen Öl-/Fettanteilen an. Durch den Bremsenabrieb und am Werkstattboden abgelagerte Schmutzteile werden Schwermetalle eingetragen, auch Pigmente aus der Lackabtragung und weitere kaum zu definierende Schadstoffe aus der Verschmutzung der Fahrzeuge.

Bei der Motorenentfettung und Teilewäsche entstehen stark tensid- und ölhaltige, meist alkalische Abwässer. Die Öle und Fette treten sowohl emulgiert als auch aufschwimmend auf. Mit der Handwäsche von Kraftfahrzeugen werden Schmutz, Öle und Fette, sowie Calcium- und Natriumseifen eingetragen. Die Vorbehandlung zur Lackierung trägt Lackpartikel, Schleifstäube, Abrieb von Kunstharzen sowie Reste von organischen Lösungsmitteln bei. Aus den Härtemitteln der Lackiervorbereitung können toxische Härter abgerieben werden und damit ins Abwasser gelangen. Kühlerflüssigkeiten (Glykole) werden zwar in der Regel getrennt gesammelt, sind aber trotzdem gelegentlich im Abwasser nachzuweisen. Ähnliches gilt für die Bremsflüssigkeiten.

Der Betriebsinhaber ist verpflichtet, das betriebliche Abwasser auf die Einhaltung der gültigen Schadstoffgrenzwerte zu überprüfen und diese einzuhalten. Mit der Technik nach DIN 1999 gelingt dies nur im Falle schwach belasteter Abwässer mit sedimentierenden und flotierenden Inhaltsstoffen, nicht aber mit emulgierten und gelösten Schadstoffen. Ständige Kontrolle und Pflege sind dabei unabdingbar (geschultes Personal, hohe Betriebskosten).

Dieser eingeschränkten Abscheidetechnik wird oft eine Emulsionsspaltung nachgeschaltet. Ein Gemisch aus organischen Fällungs- und Absetzmitteln wird dem Abwasser zudosiert. Die vom Anlagenhersteller ermittelte Dosierung gilt aber nur für einen bestimmten pH-Wert und die zum Zeitpunkt der Einstellung zufällig vorliegende Kontamination. Mit dieser auf eine Betriebspunkt justierten Anlage kann der Betreiber unmöglich das Betriebsergebnis während der gesamten Lebensdauer der Anlage garantieren.
Abweichungen führen zu erhöhten Einleitmengen und zusammen mit dem eingeführten Spaltmittel zu großen Mengen an Sekundärabfällen. Beispielsweise ergibt ein jährlicher Abwasseranfall von 2.500 m³/a, belastet mit durchschnittlich 50 mg/l Kohlenwasserstoffen, eine Abfallmenge von 7 bis 10 kg/m³ naß, bzw. 3 bis 6 kg/m³ bei 30 % Restfeuchte wenn etwa 1 kg/m³ Spaltmittel beigemengt werden.

Dazu ist die Entsorgung dieses Schlammes problematisch. Die Abwässer sind nach der Emulsionsspaltung mit einer hohen Salzfracht belastet und kaum für eine Rezyklierung geeignet. Die teilweise vorgenommene Oxidation in Form einer Ozonisierung eines in den Schlammfang rückgeführten Teilstromes ist einer der Schritte, die Anpassung der Abwasseraufbereitungsanlagen konsequent an alle auftretenden Inhaltsstoffe vorzunehmen. Dazu müssen auch Schwermetalle und wasserlösliche Lösungsmittel gehören.

Aufgabe der Erfindung ist die Schaffung eines Verfahrens zur Wiedergewinnung des Abwassers von Kfz-Betrieben, wobei eine Abtrennung der Feststoffe ohne Hilfsstoffe und damit ohne Bildung von zusätzlich zu entsorgendem Schlamm erfolgt.

Die Lösung der Aufgabe besteht darin, in Ergänzung zu den DIN 1999 behördlich genehmigten Verfahren, durch eine Oxidationsbehandlung innerhalb des gesamten Aufbereitungsprozesses Viren und Bakterien abzutöten, sowie organische Inhaltsstoffe zu oxidieren und abzubauen. Eine Mikrofiltration mit ozonverträglichen keramischen Membranen scheidet die nur noch in geringen Mengen anfallenden und somit leicht zu entsorgenden Feststoffe ab. Das Permeat kann risikolos dem Verbraucher wieder zugeführt werden. Der verfahrensspezifische stark reduzierte Bedarf an Fremdchemikalien wird im Einzelfall auf die Anforderungen abgestimmt. Auch ohne Beschränkung der Abwasserbelastung wird das Wasser im Verfahrenskreis keimfrei und geruchsneutral gehalten. Damit ist auch die Entstehung von übelriechenden Bioschlämmen ausgeschlossen. Die im Sedimenter akkumulierten Reststoffe weisen eine vorwiegend sandähnliche Konsistenz auf. Im Normalfall reduziert sich die zu entsorgende Menge auf etwa 10 % der konventioneller Anlagen.

Anhand von zwei Figuren werden die technischen Merkmale und beispielhatte Ausführungsform des erfindungsgemäßen Verfahrens erläutert.
- Fig. 1: zeigt das Fließbild des Verfahrens angepaßt an den Bedarf der Abwasseraufbereitung von Selbstbedienungswaschanlagen, Waschstraßen oder Kfz-Niederlassungen mit mäßiger Belastung und Schadstoffen aus der Lackiervorbehandlung, nicht aber Lackabfälle,
- Fig. 2: zeigt das Fließbild des Verfahrens für Einsatzfälle ohne Einschränkung der Schadstoffbelastung, insbesondere für starke Ölbelastungen.

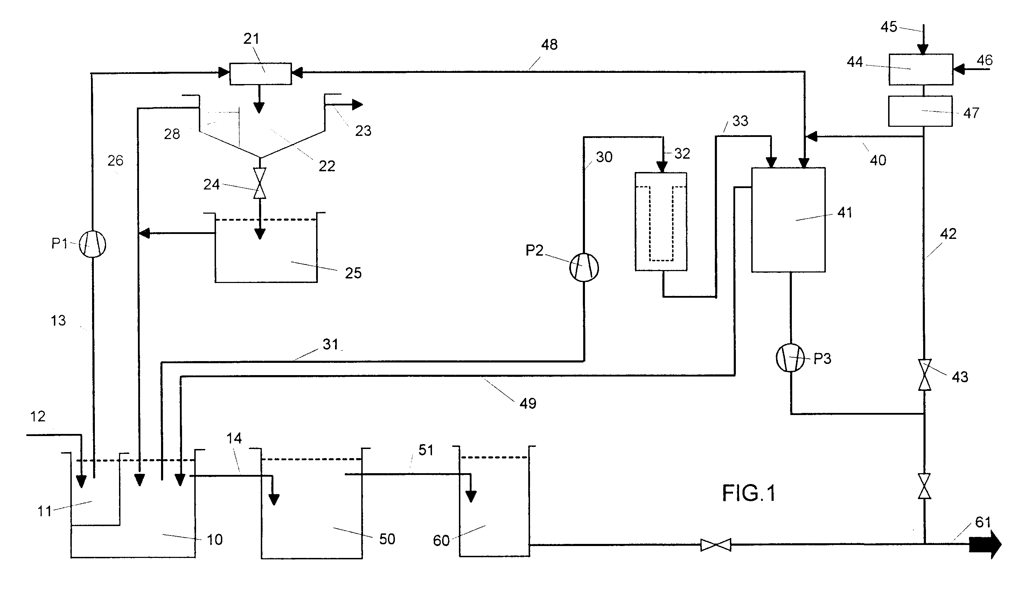

Der konventionelle, meist als Grube ausgebildete Schlammfang **10**, Fig. 1, wird zusätzlich mit einem Zusatzbehälter **11** ausgerüstet, in den das Schmutzwasser **12** von der Waschanlage oder anderen Wasserverbrauchern geleitet wird, sodaß sich der Schlamm nunmehr ausschließlich in diesem absetzt.

Erforderlichenfalls können Hauptbehälter **10** und Zulaufbehälter **11** auch getrennt angeordnet werden. Der Schmutzwasserstrom **13** wird mit Hilfe der Pumpe **P1,** zweckmäßig als Tauchpumpe ausgebildet, durch den Mischer **21** in den Sedimenter **22** gefördert. Im Mischer **21** wird dem Teilstrom **13** der mit Ozon angereicherte Teilstrom **48** beigemischt. Der Sedimenter **22** ist mit einer Grob- und Feinkoagulierungsstufe ausgerüstet. Öle und Fette werden durch Anstauen der Flüssigkeit ausgetragen und abgeführt im Teilstrom **23**. Feststoffe lassen sich über ein Ablaßventil **24** in einen Entwässerungsbehälter **25** abführen und abschlammen. Die Feststoffe haben je nach Eintrag aus der Autowäsche vorwiegend mineralischen Charakter. Sowohl aus dem Sedimenter **22** als auch aus dem Entwässerungsbehälter **25** wird das Überlaufwasser durch die Leitungen **26** und **27** dem Sammelbehälter **10** zugeführt. Der Filterschaumkeil **28** verbessert die Funktion dieser Trennstufe. Die Filterstufe **30** besteht aus der Zulaufleitung **31**, der Pumpe **P2** und dem vorzugsweise als rückspülbare Einheit ausgebildeten Filter **32**, z.B. in der Bauart eines Kantenspaltfilter. Das gereinigte Wasser **33** wird dem Verteilerbehälter **41** der Oxidationsstufe **40** zugeleitet. Die Oxidation kann durch Ozonisierung und/oder UV-Bestrahlung und/oder katalytisch erfolgen. Im Falle einer Ozonisietung wird dazu der Teilkreis **42** mit Pumpe **P3** und Absperrschieber **43** vorgesehen. Der Ozongenerator **44,** vorzugsweise nach dem Prinzip der stillen elektrischen Entladung arbeitend, saugt die Frischluft **45** an und ist über die Leitung **46** mit der Stromversorgung verbunden. Eine Einrichtung **47** dosiert den Ozoneintrag in die Leitung **42**, wobei auch bei kontinuierlicher Abwasseraufbereitung eine diskontinuierliche, z.B. getaktete Ozoneindosierung gewählt werden kann. Der Teilstrom **48** wird dem Ozonkreis entnommen und wie angegeben dem Mischer **21** zugeführt. Dies gewährleistet auch im Sedimenter **22** eine Abtötung aller Viren und Bakterien und damit eine Verhinderung des Entstehens von biologischen geruchsbelästigenden Schlämmen. Wasser gleicher Qualität wird mittels der Verbindungsleitung **49** zum Zwecke der gleichen Wirkung dem Sammelbehälter **10** zugeführt.

Dieser Behälter **10** ist mittels Leitung **14** mit dem Benzinabscheider **50**, und dieser mittels Leitung **51** mit dem Kontrollschacht **60** verbunden. Auf Grund der erreichten Aufbereitungsqualität dieses Verfahrens kann diesem Behälter **60** Reinwasser entnommen (Leitung **61**) werden, dem Wasserverbraucher zugeführt werden und somit der Frischwasserbedarf des Betriebs entscheidend reduziert werden.

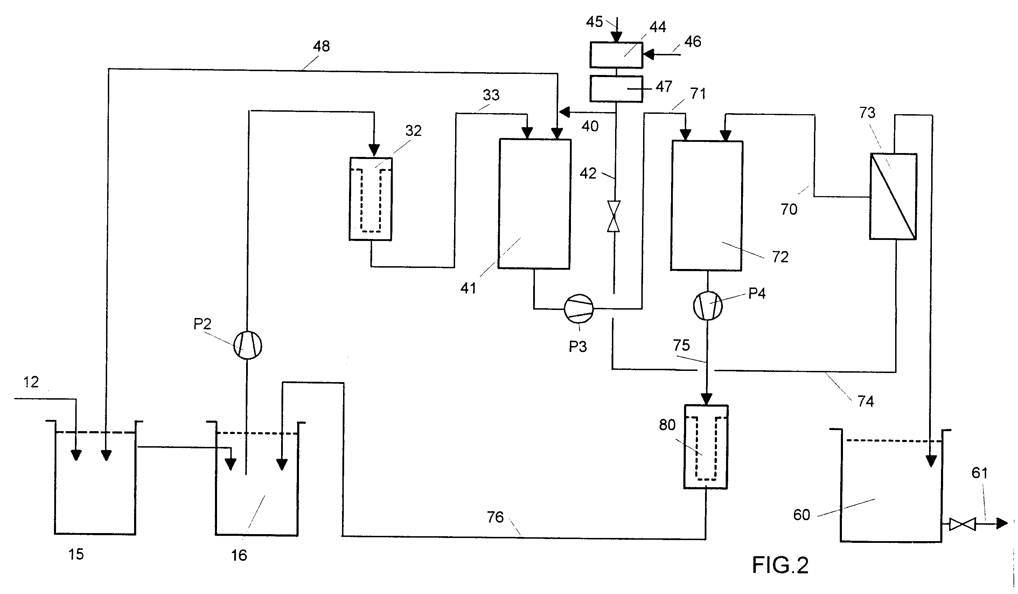

Eine Ausführungsform des erfindungsgemäßen Aufbereitungsverfahrens für eine höhere Abwasserbelastung ist in Fig. 2 dargestellt. Anlagen dieser Art eignen sich für Wasserdurchsätze bis 5 m³/h, wobei es vorteilhaft sein kann, einzelne Prozeßstufen oder Geräte doppelt oder mehrfach parallel anzuordnen. Wenn Schlammfang **15** und Rohwasserbehälter **16** für eine Nachrüstung nicht verfügbar sind, können auch ein Sedimenter **22** mit Entwässerungsbehälter **25** gemäß Fig. 1 vorgesehen werden.

Der Druckfilter **32** wird aus dem Rohwasserbehälter **16** mittels Pumpe **P2** beaufschlagt und der Teilstrom in gleicher Weise dem Ozonkreislaufbehälter **41** der Ozonisierungsstufe **40** zugeführt. Der Teilstrom **48** fließt entsprechend der Darstellung dem Schlammfang **15** zu, könnte aber wie angegeben auch in den Mischer **21** eingespeist werden.

Der Teilstrom **71** wird in den Arbeitsbehälter **72** der Mikrofiltrationsstufe **70** geleitet. Dazu gehört die Mikro- oder Ultrafiltrationsstufe **73,** die über die Pumpe **P4** und die Leitung **74** mit dem Behälter **72** verbunden ist. Erst mit der Oxidation werden hohe Standzeiten der Membran erreicht und schließlich das Rezyklieren des Wasser ermöglicht. Die Fördermenge der Pumpe **P4** wird neben dem Strom **74** auch über die Leitung **75** dem Druckfitter **80** zugeführt und von dort durch die Leitung **76** in den Rohrwasserbehälter **16** eingespeist. Mittels dieser Maßnahme erfolgt auch in diesem Behälter eine Durchmischung mit ozonisiertem Wasser.

Das Permeat der Filtration fließt dem Behälter **60** zu und steht mit der Leitung **61** dem wiederholten Verbrauch zur Verfügung.

## Patentansprüche

1. Verfahren zur Abwasserbehandlung und Wiedergewinnung von Waschabwässern in Kfz-Betrieben für Wartung und Reparatur, Autowaschanlagen und Lackierereien, **gekennzeichnet durch** die Hintereinanderschaltung einer Oxidations- und Mikrofiltrationsstufe zum Zwecke der Oxidation und Abtrennung der Wasserinhaltsstoffe, vorzugsweise der Schwermetalle.

2. Verfahren nach Anspruch 1, **gekennzeichnet durch** die Realisierung der Oxidation in Form einer Ozonisierung, UV-Bestrahlung oder katalytischen Behandlung oder Kombinationen der genannten Verfahren.

3. Verfahren nach Anspruch 1 und 2, **gekennzeichnet durch** die Mischung von Rohrwasser mit einem in der Oxidationsstufe vorbehandelten Teilstrom, um Feststoffe keim- und geruchsfrei im Sedimenter abzulagern und das ablaufende Reinwasser in den Kreislauf zurückzuführen.

4. Verfahren nach Anspruch 1 und 2, **gekennzeichnet durch** die Oxidation des vorfiltrierten Rohrwassers während eines Zeitraumes von etwa 120 min pro Charge durch Umwälzung in einem für diesen Zeitraum abgeschlossenen Teilkreis.

5. Verfahren nach Anspruch 1 und 2, **gekennzeichnet durch** die Beimischung von in der Oxidationsstufe behandeltem Wasser zum im Schlammfang gesammelten Rohrwasser.

6. Verfahren nach Anspruch 1, **gekennzeichnet durch** die Verwendung keramischer, ozonverträglicher Membranen hoher Lebensdauer für die Mikrofiltration.
